# EUROPEAN PATENT SPECIFICATION

(11) **EP 1 126 228 B1**
(45) Date of publication and mention of the grant of the patent: **18.08.2004**
(21) Application number: 01650020.9
(22) Date of filing: 16.02.2001
(51) Int. Cl.: F28D 1/02

(54) **A space heater**
Heizkörper
Radiateur

(30) Priority: 16.02.2000 IE 20000127
(43) Date of publication of application: 22.08.2001
(73) Proprietor: Tangney, James Gerard, Passage West, Cork (IE)
(72) Inventor: Tangney, James Gerard, Passage West, Cork (IE)
(74) Representative: Gorman, Francis Fergus

(56) References cited:
- CH-A- 326 296
- DE-B- 1 222 641
- FR-A- 2 726 891
- US-A- 3 120 165
- US-A- 4 313 493
- PATENT ABSTRACTS OF JAPAN vol. 009, no. 080 (M-370), 10 April 1985 (1985-04-10) -& JP 59 210299 A (MATSUSHITA DENKI SANGYO KK), 28 November 1984 (1984-11-28)

## Description

The present invention relates to a space heater, for example, a space heater for heating a room or area in a building, factory or the like. In particular, the invention relates to a space heater of the type typically referred to as a convector heater, which comprises a heat exchanger or other heat source and a circulating means for circulating air through the heat exchanger or other heat source for heating thereof.

Such space heaters are well known. Typically, they comprise a housing which defines a passageway through which air is urged by a circulating fan. The air is urged by the fan over or through a heat exchanger or other suitable heat source located in the passageway for heating thereof. The heated air is then delivered from the space heater into a room or area of a building, factory or the like to be heated. Such space heaters suffer from a number of disadvantages. Firstly, dampers are required for controlling airflow through the heater for varying the heat output, and in particular for shutting off the airflow when heat is not required. Otherwise airflow would continue through the passageway by natural convection even when the circulating fan is deactivated. Secondly, where the heat exchanger is provided by a hot water heat exchanger, valves are required for controlling water flow through the heat exchanger and for isolating the heat exchanger from the hot water supply, in order to prevent delivery of convected heat from the space heater when not required. Thirdly, such space heaters tend to generate a relatively high level of noise. The noise in general, tends to be generated by the fan or the fan bearings. In typical space heaters a cross-flow or tangental fan is used, and in general, bearings are required at each end of the fan shaft. In general, it is necessary to run such fans at a relatively high speed thereby generating noise. Wear in the bearings causes further noise, and needless to say, the higher the speed at which the fan is operated, the greater will be the rate of bearing wear. One solution to this problem is to increase the size of the fan in order that the fan speed can be reduced. However, this leads to a relatively large cumbersome space heater, which is undesirable.

U.S. Patent Specification No. 4,313,493 of Kawase discloses a space heater comprising a housing having a heat exchanger disposed around the entire periphery of the housing. A centrifugal fan is rotatably mounted in the housing for circulating air through the housing for heating thereof. A fan cover is disposed over the fan within the housing and is arranged so that the fan draws air into the housing through the peripheral heat exchanger at the bottom of the housing and at the two sides thereof, and delivers air from the housing through the peripheral heat exchanger at the top of the housing.

There is therefore a need for a space heater which overcomes at least some of the problems of known space heaters.

The present invention is directed towards providing such a space heater.

According to the invention there is provided a space heater comprising an air passageway extending therethrough, the air passageway having a first upwardly extending riser section communicating with an air inlet for accommodating air into the passageway and a second upwardly extending riser section communicating with an air outlet for accommodating air from the passageway, a heating means located in the passageway for heating air passing therethrough, and an air circulating means located in the passageway between the first riser section and the second riser section for urging air through the passageway from the air inlet to the air outlet, the first and second riser sections communicating with each other through the air circulating means, wherein the first riser section is located relative to the air circulating means, so that the direction of air passing from the first riser section into the air circulating means is turned through a first angle of at least 90° in a first rotational direction, and the heating means is located in the second riser section so that when the air circulating means is deactivated, flow of air by natural convection through the passageway from the air inlet to the air outlet is prevented.

Preferably, the second riser section is offset from the first riser section, and communicates with the first riser section through the air circulating means, so that as the air is urged from the air circulating means to the second riser section, the direction of the air is turned through a second angle in a second rotational direction opposite to the first rotational direction. Advantageously, the second angle through which the direction of the air is turned in the opposite second rotational direction is approximately 90°.

In one embodiment of the invention the air circulating means is located relative to the first riser section so that as the air is urged from the first riser section into the air circulating means, the air passes in a substantially horizontal direction after the direction of the air has been turned through the first angle in the first rotational direction, and prior to the direction of the air being turned through the second angle in the second rotational direction.

Preferably, the circulating means turns the direction of the air passing therethrough through the second angle in the second rotational direction.

In one embodiment of the invention the circulating means comprises an impeller defining a main rotational axis, and having an axial inflow coaxial with the main rotational axis, and a radial outflow. Preferably, the circulating means is located in the passageway with the main rotational axis extending substantially horizontally for drawing air axially inwardly from the first riser section and delivering the air radially therefrom to the second riser section. Advantageously, the impeller comprises a plurality of circumferentially spaced apart vanes extending in a generally radial, circumferential direction. Ideally, the vanes are backwardly curved vanes in a generally circumferential, radial direction relative to the direction of rotation of the impeller.

In one embodiment of the invention a drive means is provided for rotating the impeller, and the impeller is directly carried on a shaft of the drive means.

In another embodiment of the invention the passageway comprises an inlet section which inclines upwardly from the air inlet to the first riser section for communicating the first riser section with the air inlet. Advantageously, the inlet section and the first riser section are arranged so that as the air is passing from the inlet section to the first riser section, the direction of the air is turned through an intermediate angle in the first rotational direction. Preferably, the intermediate angle through which the direction of the air is turned in the first rotational direction as the air is passing from the inlet section to the first riser section is approximately 45°.

Preferably, the heating means comprises a water heat exchanger. Advantageously, the heat exchanger comprises a plurality of water carrying tubes, the heat exchanger being located in the second riser section with the water carrying tubes extending substantially transversely thereof, and ideally, the water carrying tubes of the heat exchanger are arranged in a matrix in which the position of the water carrying tubes in alternate rows of the matrix are staggered relative to each other for forming tortuous passages for the air passing through the heat exchanger.

In one embodiment of the invention the first riser section extends substantially vertically upwardly.

In another embodiment of the invention the second riser section extends substantially vertically upwardly.

Preferably, the drive means is a variable speed drive means for controlling the flow of air through the passageway.

The advantages of the invention are many. The space heater according to the invention can be controlled by solely operating the circulating means. Accordingly, the heat output from the space heater according to the invention can be controlled entirely by the circulating means, thereby eliminating the need for dampers. When it is desired to increase the heat output of the space heater, the circulating means is operated at a faster rate for increasing the volume of air passing through the passageway of the space heater. Reduction of the heat output from the space heater is achieved by operating the circulating means at a slower rate for reducing the volume of air being circulated through the passageway. Additionally, when heat output is no longer required from the space heater, deactivating the circulating means prevents further heat output from the space heater. This is achieved by virtue of the fact that the passageway is adapted for turning the direction of the air passing through the passageway through a first angle of at least 90° in a first rotational direction. This thus minimises and in most cases prevents natural convection of air through the passageway when the circulating means has been deactivated. This effect of minimising or preventing natural convection is further enhanced when the direction of the air passing through the passageway having been turned through the first angle of at least 90° then passes in a substantially horizontal direction. This further acts to minimise natural convection currents through the passageway. By adapting the passageway so that the direction of the air passing through the passageway is turned through a second angle in a second rotational direction opposite to the first rotational direction after the direction of the air passing through the passageway has been turned through the first angle further enhances the reduction of convection currents passing through the passageway, and when the direction of the air is turned through the second angle in the second rotational direction after the air has passed in a substantially horizontal direction, natural convection currents through the passageway are virtually eliminated.

Indeed, it has been found that the more convoluted the air passageway is, the greater the isolating effect for preventing heat being delivered from the space heater when the circulating means is deactivated, which would otherwise result from naturally convected air currents passing through the passageway.

By locating the circulating means in the passageway between the locations at which the direction of the air is turned through the first angle and the second angle further reduces the possibility of natural convection currents through the passageway when the circulating means has been deactivated. By providing the circulating means in the form of an impeller with backwardly curved vanes effectively entirely eliminates natural convection currents through the passageway when the circulating means has been deactivated, and this effect is particularly advantageously achieved when the impeller is located in the passageway between the locations at which the direction of the air passing through the passageway is turned through the respective first and second angles. The provision of the circulating means as an impeller with backwardly curved vanes has the advantage that the impeller acts as an impediment to airflow when the impeller is deactivated.

Accordingly, dampers for closing the air passageway are not required in the space heater according to the invention, since deactivation of the circulating means prevents further delivery of heated air from the space heater.

Additionally, since the heat output from the space heater can be regulated by altering the rate at which the circulating means is operated, the need for control valves for controlling the flow of heating medium, such as, for example, hot water and the like, to the heating means when the heating means is provided by a heat exchanger is eliminated. Furthermore, valves are not required for isolating the heat exchanger from the supply of water or the like since airflow through the passageway ceases on deactivation of the circulating means.

Additionally, the space heater according to the invention has the further advantage that noise from the space heater is minimised. This is achieved as a result of the fact that the direction of the air passing through the passageway is turned through the first angle in the first rotational direction, and the more angles that the direction of the air is turned through as it passes through the passageway, the greater will be the reduction of noise outputted from the space heater. Each time the direction of the air passing through the passageway is altered, noise is absorbed. Accordingly, by turning the direction of the air through the second angle further reduces the noise outputted from the space heater, and furthermore, by passing the air in the second riser section through the convoluted passages formed by the heat exchanger further reduces noise outputted from the space heater. Noise is also absorbed in the first riser section and in the inlet section of the passageway as the air passing through the inlet section and in turn the first riser section to the impeller is turned through the respective first angles. The provision of the air circulating means as an impeller having backwardly curved vanes further assists in noise reduction in that a relatively large throughflow of air is achieved from a relatively small impeller, thereby further minimising noise generated by the impeller. Additionally, by mounting the impeller directly on the motor shaft which drives the impeller, so that the motor shaft also acts as the impeller shaft, additional bearings are not required, and accordingly, the only bearings required are the motor shaft bearings in the motor. This further reduces noise, and furthermore, it has been found that the provision of the impeller having backwardly curved vanes also tends to reduce wear in the bearing.

A further advantage of the invention is that by being able to reduce the size of the air circulating means, the overall size of the space heater is likewise similarly reduced.

The invention will be more clearly understood from the following description of a preferred embodiment thereof, which is given by way of example only, with reference to the accompanying drawings in which:

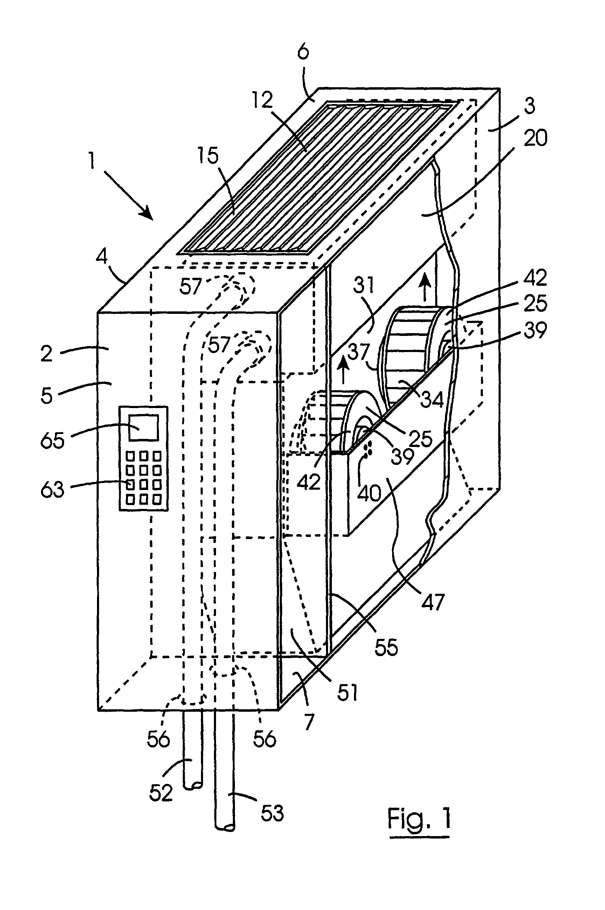

Fig. 1 is a partly cut away perspective view of a space heater according to the invention,
Fig. 2 is a sectional front elevational view of the space heater of Fig. 1 with a portion of the space heater removed,
Fig. 3 is a transverse cross-sectional end elevational view of the space heater on the line III-III of Fig. 2,
Fig. 4 is a transverse cross-sectional end elevational view of the space heater on the line IV-IV of Fig. 2,
Fig. 5 is a perspective view of a portion of the space heater of Fig. 1,
Fig. 6 is another perspective view of the portion of Fig. 5,
Fig. 7 is a cross-sectional front elevational view of the portion of Fig. 5, and
Fig. 8 is a block representation of a control circuit of the space heater of Fig. 1.

Referring to the drawings there is illustrated a space heater according to the invention indicated generally by the reference numeral 1. The space heater 1 is particularly suitable for heating a room of a domestic or commercial building, or an area in an industrial premises or the like. The space heater 1 comprises a housing 2 formed by a front wall 3, a rear wall 4 and end walls 5, which join the front and rear walls 3 and 4. A top wall 6 and a bottom wall 7 extend between the front, rear and end walls 3, 4 and 5. The housing 2 defines an air passageway 10 which extends through the housing 2 from an air inlet 11 formed in the bottom wall 7 of the housing 2 to an air outlet 12 formed in the top wall 6 of the housing 2. Louvre plates 15 in the air outlet 12 direct air exiting from the air outlet 12 upwardly and forwardly outwardly from the heater 1. A heating means provided by a heat exchanger 20 is located in the passageway 10 for heating air passing through the passageway 10. The heat exchanger 20 in this embodiment of the invention comprises a bank of parallel heat exchange tubes 21 which are heated by hot water from a hot water central heating system. An air circulating means comprising a pair of motor driven impellers 25 are located in the passageway 10 for urging air through the passageway 10 and through the heat exchanger 20 in the direction of the arrows A from the air inlet 11 to the air outlet 12 for heating thereof. Before describing the impellers 25 and the heat exchanger 20 in further detail, the passageway 10 will first be described.

The passageway 10 comprises a first upwardly extending vertical riser section 28 which communicates with the air inlet 11 through an upwardly inclined inlet section 29, which extends at an angle of 45° to the vertical. A second upwardly extending vertical riser section 30 of the passageway 10 communicates with the air outlet 12, and is separated from the first riser section 28 by a front panel 31 and a top panel 32. A lower portion 34 of the second riser section 30 is offset forwardly from the first riser section 28 and communicates with the first riser section 28 through a pair of circular communicating openings 35 in the front panel 31. Cylindrical cowlings 37 extending around the communicating openings 35 from the front panel 31 direct air from the first riser section 28 into the respective impellers 25.

The impellers 25 are secured to impeller shafts 38 which are driven by respective drive means, namely, electrically powered variable speed motors 39, which are mounted on a subhousing 47 which is secured to the front panel 31. Screws 40 secure the motors 39 to the subhousing 47 which forms part of the lower portion of the second riser section 30. The impeller shafts 38 are formed by drive shafts of the respective motors 39, and thus, are supported on bearings (not shown) of the motors 39. Accordingly, additional bearings for the impeller shafts 38 are not required. The impeller shafts 38 define corresponding main rotational axes 41 about which the impellers 25 rotate, and the impellers 38 are located in the lower portions 34 of the second riser section 30 with the respective main rotational axes 41 extending horizontally. Each impeller 25 comprises a pair of spaced apart discs 42 and 43, one of which, namely, the disc 42, is rigidly mounted on the corresponding impeller shaft 38. Additionally, the disc 42 is shaped at 44 for accommodating the corresponding motor 39. A plurality of backwardly curved vanes 45 which are equispaced apart circumferentially extend between the discs 42 and 43. The vanes 45 of each impeller 25 extend outwardly relative to the corresponding main rotational axis 41 in a general radial circumferential direction rearwardly relative to the direction of rotation B of the impeller 25. A centrally located opening 46 in the disc 43 of each impeller 25 accommodates air from the first riser section 28 axially into the corresponding impeller 25. The backwardly curved vanes 45 deliver air from the impellers 25 radially outwardly therefrom into the second riser section 30.

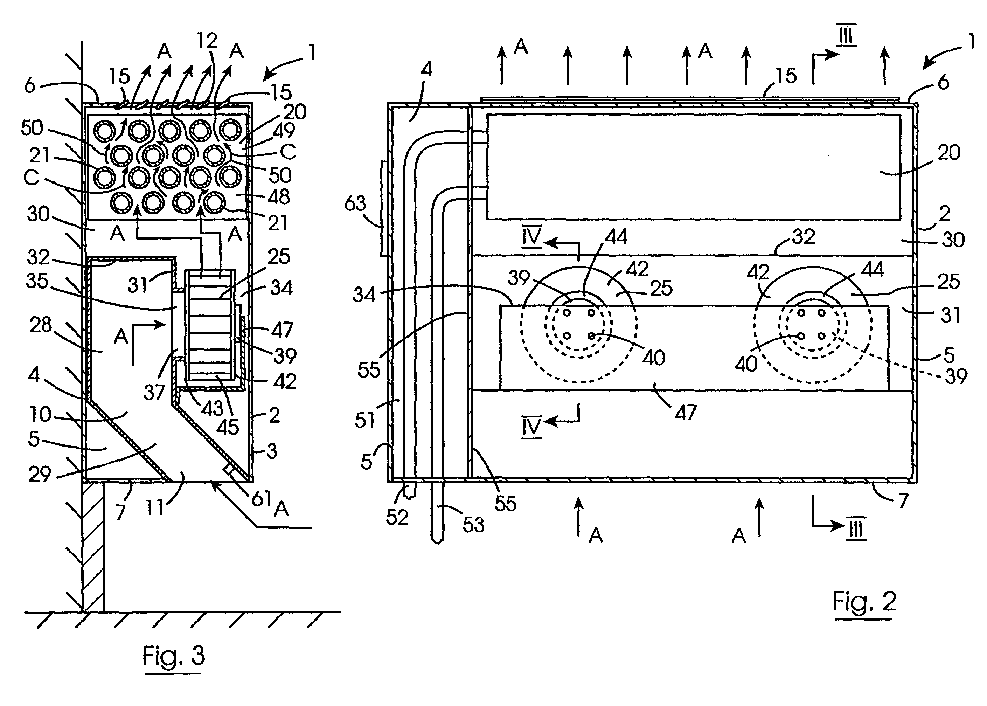

The heat exchanger 20 is located in an upper portion 48 of the second riser section 30, and a plurality of spaced apart heat exchange baffle plates 49 are located at spaced apart intervals along the water accommodating tubes 21. The water accommodating tubes 21 are arranged when viewed from either end in a matrix, and the water accommodating tubes 21 of each horizontal row of tubes 21 in the matrix are staggered relative to the tubes 21 of the adjacent row. This can be clearly seen in Fig. 3. This staggered arrangement of the water accommodating tubes 21 forms a plurality of convoluted zigzag passages 50 through which air must pass in the second riser section 30 in the directions of the arrows C for increasing heat exchange between the air and the water accommodating tubes 21.

The passageway 10 and the impellers 25 are thus arranged so that the direction of air being drawn from the first riser section 28 by the impellers 25, and delivered into the second riser section 30, is initially turned through a first angle of 90° in a first rotational direction, namely, a clockwise direction, and then through a second angle of 90° in a second rotational direction, namely, an anticlockwise direction, see Fig. 3. The direction of the air is turned through the first angle as the air passes from the first riser section 28 through the cowlings 37 into the corresponding impellers 25. In other words, the direction of the air is changed from being vertical in the first riser section 28 to being horizontal as the air passes through the cowlings 37 into the impellers 25. The direction of the air is then turned through a second angle from the horizontal direction in the impellers 25 to pass into the second riser section 30 vertically. Additionally, the air as it passes from the inlet section 29 to the first riser section 28 is turned through an initial intermediate angle also in the first rotational direction of approximately 45°. Accordingly, the sum of the angles through which the direction of the air is turned in the first rotational direction clockwise from the air inlet 11 to the impellers 25 is approximately 135°. The air then is turned through the second angle of 90° in an anticlockwise direction in the impeller 25.

However, as the air passes from the lower portion 34 of the second riser section 30 into the upper portion 48, some of the air is further rotated in an anticlockwise direction through a further angle of almost 90°, and then in a clockwise direction through a further angle of almost 90° before it finally passes through the rearmost water accommodating tubes 21 of the heat exchanger 20. Thereafter, as the air passes through the passages 50 in the heat exchanger 20 defined by the water accommodating tubes 21 it follows the convoluted zigzag directions of the passages 50. By virtue of the fact that the direction of the air passing through the passageway 10 is turned through so many angles in the respective first and second rotational directions, natural convection of air through the passageway 10 is virtually eliminated, and thus when the impellers 25 are stationary there is no airflow through the passageway 10. The provision of the impellers 25 in the lower portion 34 of the second riser section 30 adjacent the communicating openings 35 further reduces any possibility of natural convection of air in the passageway 10. The fact that the impellers 25 are provided with backwardly curved vanes further acts to eliminate any possibility of natural convection through the passageway 10. Accordingly, once the motors 39 have been deactivated and the impellers 25 are stationary, virtually no heat emanates from the space heater, and none emanates through convection, natural or otherwise. Accordingly, the space heater can be provided without dampers in the passageway 10, and the heat exchanger can be connected to the central heating system without control valves.

Additionally, the altering of the direction of the air both prior to the air reaching the impellers 25, and after the air has passed through the impellers 25, significantly reduces noise from the space heater, since each time the direction of the air is altered as it passes through the passageway 10, noise from the impellers 25 is absorbed, and thus, little or no noise exits through the air inlet 11 and the air outlet 12.

A side duct 51 extends upwardly at one side of the housing 2 for accommodating flow and return pipes 52 and 53, respectively, to the heat exchanger 20. A side panel 55 separates the duct 51 from the passageway 10. Pipe accommodating openings 56 and 57 in the bottom wall 7 and the side panel 55, respectively, accommodate the flow and return pipes 52 and 53 into the housing 2 and the heat exchanger 20.

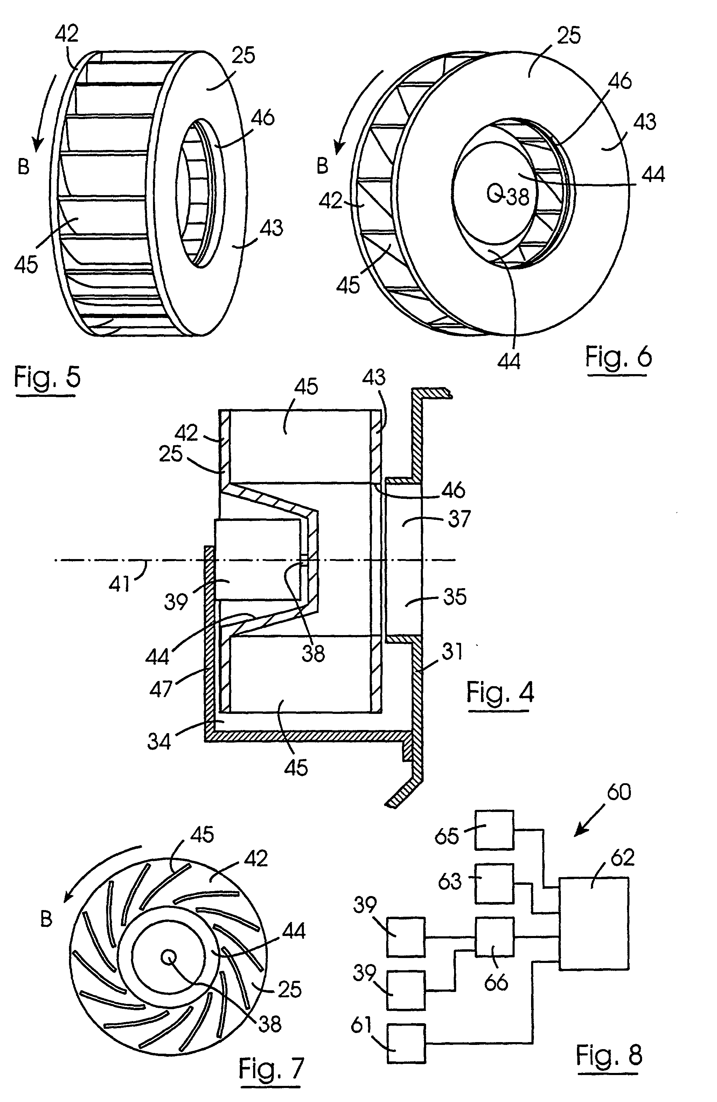

Control circuitry indicated by the reference numeral 60, see Fig. 8, is provided in the housing 2 for controlling the operation and the operating speed of the motors 39 in response to temperature change. A temperature sensor 61 is located at the air inlet 11 for facilitating monitoring of the temperature of the air being drawn from the room into the passageway 10 by the impellers 25. A microprocessor 62 in the control circuit 60 reads the temperature sensor 61 for determining the temperature of the return air from the room to the space heater. A keypad 63 mounted on the housing 2 facilitates inputting of desired upper and lower set point temperatures within which the temperature of the air in the room is to be maintained into the microprocessor 62. A liquid crystal display 65 mounted on the housing 2 displays the selected upper and lower set points and the current return air temperature under the control of the microprocessor 62. A driver circuit 66 controls the operation of the motors 39 under the control of the microprocessor 62. The circuit 60 and the motors 39 are powered by an AC mains electricity power supply.

Although not illustrated, the front, rear and end walls 3, 4 and 5 are of double skin construction, having a layer of insulating material located between the respective inner and outer skins for minimising heat loss through the front, rear and end walls 3, 4 and 5, respectively of the space heater, which would otherwise be lost as a result of conduction, and convection due to air coming in contact with the front, rear and end walls 3, 4 and 5, and also through radiation.

The space heater may be constructed from any suitable materials, however, typically, the space heater will be constructed from sheet metal.

The louvre plates 15 extend at an angle of approximately 60° to the horizontal, and thus, the direction of the air exiting from the heat exchanger 20 through the air outlet 12 is turned through a further angle of approximately 60° in a clockwise direction as it exits through the air outlet 12.

In this embodiment of the invention the inertia of the impellers 25 is such that on start-up and shutdown the motors 39 accelerate gradually from zero speed to normal operating speed, and similarly on shutdown decelerate gradually from the running speed to zero speed, thereby further minimising noise on start-up and shutdown of the motors 39.

In use, the space heater 1 is appropriately mounted, for example, on a wall or other structure of a room to be heated, for example, as illustrated in Fig. 3. The air inlet 11 is located to the bottom, while the air outlet 12 is located to the top. The heat exchanger 20 is connected to flow and return pipes 52 and 53 from the central heating system.

When the space heater 1 is powered up and the desired upper and lower set point temperatures have been entered through the keypad 63, the space heater 1 operates as follows. For so long as the return air temperature is below the lower set point temperature, the motors 39 power the impellers 25 for urging air through the passageway 10 in the direction of the arrows A, and through the heat exchanger 20 in the direction of the arrows C for heating thereof, which is in turn delivered through the air outlet 12 into the room. The microprocessor 62 periodically monitors the temperature sensor 61 at predetermined time intervals of four minutes for determining the return air temperature to the space heater 1. On the return air temperature reaching the lower set point, the motors 39 are operated under the control of the microprocessor 62 at progressively slower speeds until the return air temperature reaches the upper set point temperature, at which stage the motors 39 are deactivated. At appropriate intervals of predetermined time, typically, at four-minute intervals, the microprocessor 62 powers up the motors 39 for operating the impellers 25 for in turn urging air through the passageway 10 for respective predetermined time periods, which typically are of the order of one minute. With the motors 39 powered, the microprocessor 62 reads the temperature sensor 61 for determining the return air temperature. On the return air temperature dropping to the lower set point temperature, the motors 39 are again activated to run continuously, and as the return air temperature progressively rises to the upper set point temperature, the speed of the motors 39 is progressively reduced until the return air temperature has again reached the upper set point temperature, at which stage the motors 39 are again deactivated, and so on.

When heat is no longer required from the space heater 1, by keying in an appropriate command through the keypad 63, the motors 39 are deactivated by the microprocessor 62. Since airflow through the passageway 10 is prevented when the impellers 25 are stationary, no heat is delivered from the space heater 1 into the room once the motors 39 are deactivated. Thus, if the central heating system into which the heat exchanger 20 is connected continues to be operational, thus maintaining heat in the heat exchanger 20, no heat will emanate into the room until the motors 39 are operated for rotating the impellers 25. This provides a further advantage, in that while the central heating system is operational the heat exchanger 20 is maintained heated, so that immediately the motors 39 are activated for rotating the impellers 25, heat is immediately delivered from the space heater 1 into the room.

While the space heater has been described as comprising two impellers, it will be readily apparent to those skilled in the art that a single impeller would be sufficient in certain cases.

While predetermined time intervals of specific values have been described at which sampling of the temperature of the air returning to the space heater 1 is carried out during periods while the space heater is operating, and during periods while the motors have been deactivated, it will be readily apparent to those skilled in the art that sampling of the air temperature could be carried out at predetermined time intervals of different specific values, and further, it is envisaged that the intervals for sampling during operation of the motors may be different to the sampling intervals during periods while the motors are deactivated, but while the space heater is still operational.

## Claims

1. A space heater comprising an air passageway (10) extending therethrough, the air passageway (10) having a first upwardly extending riser section (28) communicating with an air inlet (11) for accommodating air into the passageway (10) and a second upwardly extending riser section (30) communicating with an air outlet (12) for accommodating air from the passageway (10), a heating means located in the passageway (10) for heating air passing therethrough, and an air circulating means (25) located in the passageway (10) between the first riser section (28) and the second riser section (30) for urging air through the passageway (10) from the air inlet (11) to the air outlet (12), the first and second riser sections (28,30) communicating with each other through the air circulating means (25), **characterised in that** the first riser section (28) is located relative to the air circulating means (25), so that the direction of air passing from the first riser section (28) into the air circulating means (25) is turned through a first angle of at least 90° in a first rotational direction, and the heating means is located in the second riser section (30) so that when the air circulating means is deactivated, flow of air by natural convection through the passageway (10) from the air inlet (11) to the air outlet (12) is prevented.

2. A space heater as claimed in Claim 1 **characterised in that** the second riser section (30) is offset from the first riser section (28), and communicates with the first riser section (28) through the air circulating means (25), so that as the air is urged from the air circulating means (25) to the second riser section (30), the direction of the air is turned through a second angle in a second rotational direction opposite to the first rotational direction.

3. A space heater as claimed in Claim 2 **characterised in that** the second angle through which the direction of the air is turned in the opposite second rotational direction is approximately 90°.

4. A space heater as claimed in Claim 2 or 3 **characterised in that** the air circulating means (25) is located relative to the first riser section (28), so that as the air is urged from the first riser section (28) into the air circulating means (25), the air passes in a substantially horizontal direction after the direction of the air has been turned through the first angle in the first rotational direction, and prior to the direction of the air being turned through the second angle in the second rotational direction.

5. A space heater as claimed in any of Claims 2 to 4 **characterised in that** the circulating means (25) turns the direction of the air passing therethrough through the second angle in the second rotational direction.

6. A space heater as claimed in any preceding claim **characterised in that** the circulating means (25) comprises an impeller (25) defining a main rotational axis (41), and having an axial inflow coaxial with the main rotational axis (41), and a radial outflow, and the circulating means (25) is located in the passageway (10) with the main rotational axis (41) extending substantially horizontally for drawing air axially inwardly from the first riser section (28) and delivering the air radially therefrom to the second riser section (30).

7. A space heater as claimed in Claim 6 **characterised in that** the impeller (25) comprises a plurality of circumferentially spaced apart vanes (45) extending in a generally radial, circumferential direction, the vanes (45) being backwardly curved vanes (45) in a general circumferential, radial direction relative to the direction of rotation of the impeller.

8. A space heater as claimed in Claims 6 or 7 **characterised in that** a drive means (39) is provided for rotating the impeller (25), and the impeller (25) is directly carried on a shaft (38) of the drive means (39).

9. A space heater as claimed in Claim 8 **characterised in that** the drive means (39) is a variable speed drive means for controlling the flow rate of air through the passageway (10).

10. A space heater as claimed in any preceding claim **characterised in that** the passageway (10) comprises an inlet section (29) which inclines upwardly from the air inlet (11) to the first riser section (28) for communicating the first riser section (28) with the air inlet (11), the inlet section (29) and the first riser section (28) being arranged so that as the air is passing from the inlet section (29) to the first riser section (28), the direction of the air is turned through an intermediate angle in the first rotational direction.

11. A space heater as claimed in Claim 10 **characterised in that** the intermediate angle through which the direction of the air is turned in the first rotational direction as the air is passing from the inlet section (29) to the first riser section (28) is approximately 45°.

12. A space heater as claimed in any preceding claim **characterised in that** the heating means comprises a water heat exchanger (20).

13. A space heater as claimed in Claim 12 **characterised in that** the heat exchanger (20) comprises a plurality of water carrying tubes (21), the heat exchanger (20) being located in the second riser section (30) with the water carrying tubes (21) extending substantially transversely thereof, and the water carrying tubes (21) of the heat exchanger (20) are arranged in a matrix in which the position of the water carrying tubes (21) in alternate rows of the matrix are staggered relative to each other for forming tortuous passages (50) for the air passing through the heat exchanger (20).

14. A space heater as claimed in any preceding claim **characterised in that** the first riser section (28) extends substantially vertically upwardly, and the second riser section (30) extends substantially vertically upwardly.

## Patentansprüche

1. Heizkörper umfassend einen sich durch den Heizkörper hindurch erstreckenden Luftdurchgang (10), wobei der Luftdurchgang (10) einen ersten sich nach oben erstreckenden Aufstiegsabschnitt (28) besitzt, der mit einem Lufteinlass (11) kommuniziert, um Luft in den Durchgang (10) einzubringen, und einen zweiten sich nach oben erstreckenden Aufstiegsabschnitt (30), der mit einem Luftauslass (12) kommuniziert, um Luft aus dem Durchgang (10) auszubringen, ein in dem Durchgang (10) angeordnetes Heizmittel zum Aufheizen hindurchtretender Luft und ein in dem Durchgang (10) zwischen dem ersten Aufstiegsabschnitt (28) und dem zweiten Aufstiegsabschnitt (30) angeordnetes Luftzirkulationsmittel, um Luft durch den Durchgang (10) von dem Lufteinlass (11) zum Luftauslass (12) zu drängen, wobei der erste und zweite Aufstiegsabschnitt (28, 30) durch das Luftzirkulationsmittel (25) miteinander kommunizieren, **dadurch gekennzeichnet, dass** der erste Aufstiegsabschnitt (28) bezüglich des Luftzirkulationsmittels (25) derart angeordnet ist, dass die Richtung der von dem ersten Aufstiegsabschnitt (28) in das Luftzirkulationsmittel (28) hineintretenden Luft um einen ersten Winkel von wenigstens 90° in eine erste Drehrichtung gedreht wird und dass das Heizmittel derart in dem zweiten Aufstiegsabschnitt (30) angeordnet ist, dass wenn das Luftzirkulationsmittel deaktiviert wird, das Strömen von Luft aufgrund natürlicher Konfektion durch den Durchgang (10) von dem Lufteinlass (11) zum Luftauslass (12) verhindert wird.

2. Heizkörper gemäß Anspruch 1, **dadurch gekennzeichnet, dass** der zweite Aufstiegsabschnitt (30) von dem ersten Aufstiegsabschnitt (28) beabstandet ist und mit dem ersten Aufstiegsabschnitt (28) durch das Luftzirkulationsmittel (25) derart kommuniziert, dass wenn die Luft von dem Luftzirkulationsmittel (25) zu dem zweiten Aufstiegsabschnitt (30) gedrängt wird, die Richtung der Luft um einen zweiten Winkel in eine der ersten Drehrichtung entgegengesetzte zweite Drehrichtung gedreht wird.

3. Heizkörper nach Anspruch 2, **dadurch gekennzeichnet, dass** der zweite Winkel, um welchen die Richtung der Luft in die entgegengesetzte zweite Drehrichtung gedreht wird, ungefähr 90° beträgt.

4. Heizköper nach Anspruch 2 oder 3, **dadurch gekennzeichnet, dass** das Luftzirkulationsmittel (25) bezüglich des ersten Aufstiegsabschnitts (28) derart angeordnet ist, dass wenn die Luft von dem ersten Aufstiegsabschnitt (28) in das Luftzirkulationsmittel (25) gedrängt wird, die Luft, nachdem die Luft um den ersten Winkel in die erste Drehrichtung gedreht wurde und bevor die Richtung der Luft um den zweiten Winkel in die zweite Drehrichtung gedreht wird, in einer im Wesentlichen horizontalen Richtung strömt.

5. Heizkörper nach einem der Ansprüche 2 bis 4, **dadurch gekennzeichnet, dass** das Zirkulationsmittel (25) die durch das Zirkulationsmittel hindurch tretende Luft um den zweiten Winkel in die zweite Drehrichtung dreht.

6. Heizkörper nach einem der vorhergehenden Ansprüche, **dadurch gekennzeichnet, dass** das Zirkulationsmittel (25) ein Flügelrad (25) umfasst, das eine Hauptdrehachse (41) definiert, und einen axialen Einlass hat, der koaxial bezüglich der Hauptdrehachse (41) verläuft, und einen radialen Auslass, und das Zirkulationsmittel (25) in dem Durchgang (10) derart angeordnet ist, dass die Hauptdrehachse (41) sich im Wesentlichen horizontal erstreckt, um Luft axial von dem ersten Aufstiegsabschnitt (28) einzusaugen und die Luft radial hierzu dem zweiten Aufstiegsabschnitt (30) zuzuführen.

7. Heizkörper nach Anspruch 6, **dadurch gekennzeichnet, dass** das Flügelrad (25) eine Vielzahl von in Umfangsrichtung beabstandeten Flügeln (45) umfasst, die sich in einer im Allgemeinen radialen Umfangsrichtung erstrecken, wobei die Flügel (45) in einer im Allgemeinen bezüglich des Umfangs radialen Richtung bezüglich der Drehrichtung des Flügelrads nach hinten gekrümmte Flügel (45) sind.

8. Heizkörper nach Anspruch 6 oder 7, **dadurch gekennzeichnet, dass** ein Antriebsmittel (39) zum Drehen des Flügelrads (25) vorgesehen ist und das Flügelrad (25) unmittelbar von einem Schaft (30) des Antriebsmittels (39) getragen ist.

9. Heizkörper nach Anspruch 8, **dadurch gekennzeichnet, dass** das Antriebsmittel (39) ein Antriebsmittel mit veränderlicher Geschwindigkeit ist, um die Luftströmungsrate durch den Durchgang (10) zu steuern.

10. Heizkörper nach einem der vorhergehenden Ansprüche, **dadurch gekennzeichnet, dass** der Durchgang (10) einen Einlassabschnitt (29) umfasst, der vom Lufteinlass (11) zum ersten Aufstiegsabschnitt (28) nach oben gekrümmt ist, um den ersten Aufstiegsabschnitt (28) mit dem Lufteinlass (11) zu verbinden, wobei der Einlassabschnitt (29) und der erste Aufstiegsabschnitt (28) derart angeordnet sind, dass sich die Richtung der Luft um einen Zwischenwinkel in der ersten Drehrichtung dreht, wenn die Luft von dem Einlassabschnitt (28) zum ersten Aufstiegsabschnitt (28) strömt.

11. Heizkörper nach Anspruch 10, **dadurch gekennzeichnet, dass** der Zwischenwinkel, um welchen die Luft in die erste Drehrichtung gedreht wird, wenn die Luft vom Einlassabschnitt (28) zum ersten Aufstiegsabschnitt (28) strömt, ungefähr 45° beträgt.

12. Heizkörper nach einem der vorhergehenden Ansprüche, **dadurch gekennzeichnet, dass** der Heizkörper einen Wasserwärmetauscher (20) umfasst.

13. Heizkörper nach Anspruch 12, **dadurch gekennzeichnet, dass** der Wärmetauscher (20) eine Mehrzahl von mit Wasser befüllten Röhren (21) umfasst, wobei der Wärmetauscher (20) in dem zweiten Aufstiegsabschnitt (30) mit im Wesentlichen quer verlaufenden, mit Wasser befüllten Röhren (21) angeordnet ist und die mit Wasser befüllten Röhren (21) des Wärmetauschers (20) in einer Matrix angeordnet ist, bei der die Lage der mit Wasser befüllten Röhren (21) in abwechselnden Reihen der Matrix relativ zueinander gestaffelt sind, um gewundene Passagen (50) für die durch den Wärmetauscher (20) strömende Luft zu bilden.

14. Heizkörper nach einem der vorhergehenden Ansprüche, **dadurch gekennzeichnet, dass** der erste Aufstiegsabschnitt (28) sich im Wesentlichen vertikal nach oben erstreckt und der zweite Aufstiegsabschnitt (30) sich im Wesentlichen vertikal nach oben erstreckt.

## Revendications

1. Radiateur comprenant un passage d'air (10) s'étendant à travers celui-ci, le passage d'air (10) comportant une première section montante (28) s'étendant vers le haut communiquant avec une entrée d'air (11) pour recevoir l'air dans le passage (10) et une deuxième section montante s'étendant vers le haut (30) communiquant avec une sortie d'air (12) pour recevoir l'air du passage (10), un moyen chauffant situé dans le passage (10) pour chauffer l'air passant à travers celui-ci, et un moyen de circulation d'air (25) situé dans le passage (10) entre la première section montante (28) et la deuxième section montante (30) pour solliciter l'air à travers le passage (10) de l'entrée d'air (11) à la sortie d'air (12), les première et deuxième sections montantes (28,30) communiquant l'une avec l'autre par le moyen de circulation d'air (25), **caractérisé en ce que** la première section montante (28) est située relativement au moyen de circulation d'air (25) de façon que la direction de l'air passant de la première section montante (28) dans le moyen de circulation d'air (25) soit tournée selon un premier angle d'au moins 90° dans une première direction de rotation, et le moyen chauffant se situe dans la deuxième section montante (30) de telle sorte que lorsque le moyen de circulation d'air est désactivé, l'écoulement d'air par convexion naturelle à travers le passage (10) depuis l'entrée de l'air (11) à la sortie de l'air (12) est empêché.

2. Radiateur selon la revendication 1, **caractérisé en ce que** la deuxième section montante (30) est décalée de la première section montante (28) et communique avec la première section montante (28) par le moyen de circulation d'air (25) de telle sorte que, lorsque l'air est sollicité du moyen de circulation d'air (25) à la deuxième section montante (30), la direction de l'air est tournée selon un deuxième angle dans une deuxième direction de rotation opposée à la première direction de rotation.

3. Radiateur selon la revendication 2, **caractérisé en ce que** le deuxième angle, selon lequel la direction de l'air est tournée dans la deuxième direction de rotation opposée, est d'environ 90°.

4. Radiateur selon la revendication 2 ou 3, **caractérisé en ce que** le moyen de circulation d'air (25) est situé relativement à la première section montante (28) de façon que, lorsque l'air est sollicité de la première section montante (28) dans le moyen de circulation d'air (25), l'air passe dans une direction sensiblement horizontale après que la direction de l'air a été tournée selon le premier angle dans la première direction de rotation, et avant que la direction de l'air soit tournée selon le second angle dans la seconde direction de rotation.

5. Radiateur selon l'une des revendications 2 à 4, **caractérisé en ce que** le moyen de circulation (25) tourne la direction de l'air passant à travers celui-ci selon le second angle dans la seconde direction de rotation.

6. Radiateur selon l'une des revendications précédentes, **caractérisé en ce que** le moyen de circulation (25) comprend une hélice (25) définissant un axe de rotation principal (41), et ayant un afflux axial coaxial à l'axe de rotation principal (41), et une décharge radiale, et le moyen de circulation (25) se situe dans le passage (10), l'axe de rotation principal (41) s'étendant sensiblement horizontalement pour aspirer l'air axialement vers l'intérieur depuis la première section montante (28) et pour transmettre l'air radialement de celle-ci à la seconde section montante (30).

7. Radiateur selon la revendication 6, **caractérisé en ce que** l'hélice (25) comprend plusieurs ailettes espacées circonférentiellement (45) s'étendant dans une direction circonférentielle généralement radiale, les ailettes (45) étant des ailettes (45) courbées vers l'arrière dans une direction radiale généralement circonférentielle relativement à la direction de rotation de l'hélice.

8. Radiateur selon les revendications 6 ou 7, **caractérisé en ce qu'**un moyen d'entraînement (39) est prévu pour faire tourner l'hélice (25), et l'hélice (25) est supportée directement sur un arbre (38) du moyen d'entraînement (39).

9. Radiateur selon la revendication 8, **caractérisé en ce que** le moyen d'entraînement (39) est un moyen d'entraînement à vitesse variable pour régler le débit d'écoulement d'air à travers le passage (10).

10. Radiateur selon l'une des revendications précédentes, **caractérisé en ce que** le passage (10) comprend une section d'admission (29) qui est inclinée vers le haut depuis l'entrée d'air (11) à la première section montante (28) pour faire communiquer la première section montante (28) avec l'entrée d'air (11), la section d'entrée (29) et la première section montante (28) étant agencées de telle sorte que lorsque l'air passe de la section d'admission (29) à la première section montante (28), la direction de l'air est tournée selon l'angle intermédiaire dans la première direction de rotation.

11. Radiateur selon la revendication 10, **caractérisé en ce que** l'angle intermédiaire selon lequel la direction de l'air est tournée dans la première direction de rotation, lorsque l'air passe de la section d'admission (29) à la première section montante (28), est d'environ 45°.

12. Radiateur selon l'une des revendications précédentes, **caractérisé en ce que** le moyen de chauffage comprend un échangeur de chaleur à eau (20).

13. Radiateur selon la revendication 12, **caractérisé en ce que** l'échangeur de chaleur (20) comprend plusieurs tubes (21) portant l'eau, l'échangeur de chaleur (20) se situant dans la seconde section montante (30), les tubes (21) renfermant l'eau s'étendant sensiblement transversalement à celle-ci, et les tubes renfermant l'eau (21) de l'échangeur de chaleur (20) sont agencés selon une matrice dans laquelle la position des tubes (21) portant l'eau selon des rangées alternées de la matrice sont échelonnés les uns par rapport aux autres pour former des passages tortueux (50) pour l'air passant à travers l'échangeur de chaleur (20).

14. Radiateur selon l'une des revendications précédentes, **caractérisé en ce que** la première section montante (28) s'étend sensiblement verticalement vers le haut, et la seconde section montante (30) s'étend sensiblement verticalement vers le haut.
